# EUROPÄISCHE PATENTSCHRIFT

(11) **EP 0 803 643 B1**
(45) Veröffentlichungstag und Bekanntmachung des Hinweises auf die Patenterteilung: **31.03.2004**
(21) Anmeldenummer: 97105820.1
(22) Anmeldetag: 09.04.1997
(51) Int. Cl.: F01N 3/28, B01D 53/94

(54) **Abgaskatalysator**
Exhaust gas catalyst
Catalyseur pour gaz d'échappement

(30) Priorität: 27.04.1996 DE 29607667 U
(43) Veröffentlichungstag der Anmeldung: 29.10.1997
(73) Patentinhaber: Faurecia Abgastechnik GmbH, 90765 Fürth (DE)
(72) Erfinder: Stöpler, Walter, Dr., 91074 Herzogenaurach (DE)
(74) Vertreter: Mörtel & Höfner

(56) Entgegenhaltungen:
- WO-A-94/24425
- US-A- 3 966 419

## Beschreibung

Die Erfindung betrifft einen Abgaskatalysator für Kraftfahrzeuge. Solche Abgaskatalysatoren weisen ein Gehäuse auf, in dem ein keramischer Katalysatorkörper, ein Monolith, gelagert ist. In einem zwischen dem Gehäuse und der Umfangsfläche des Monolithen angeordneten Spaltraum ist eine Lagerungsmatte angeordnet. Vielfach finden dafür sogenannte Bläh- oder Quellmatten Verwendung, die auch im heißen Betriebszustand des Abgaskatalysators, in dem der Spaltraum zwischen Gehäuse und Monolith entsprechend geweitet ist, noch eine ausreichende Halterung des oder der Monolithen gewährleisten. Diese Lagerungsmatten enthalten Blähglimmer, der bei den Betriebstemperaturen des Katalysators in einen expandierten Zustand übergeht. Dadurch wird die erwärmungsbedingte Spalterweiterung ausgeglichen.

Es finden aber auch Lagerungsmatten Verwendung, die keinen Blähglimmer enthalten.

Solche Lagerungsmatten üben von sich aus genügend große elastische Rückstellkräfte auf die Umfangsfläche eines Monolithen bzw. die Innenumfangsfläche des Gehäuses des Abgaskatalysators aus, so daß auch im heißen Betriebszustand und bei entsprechend erweitertem Spaltraum zwischen Monolith und Gehäuse eine ausreichende Lagerung des Monolithen gewährleistet ist. Die Fasern dieser Matten bestehen aus mineralischen Stoffen, die eine gegenüber den Werkstoffen herkömmlicher, in Quellmatten verwendeten Fasern eine erhöhte Eigenelastizität aufweisen. Solche Fasern sind beispielsweise Aluminiumoxidfasern, die 95% Aluminiumoxid und gegebenenfalls übliche Zusatzstoffe enthalten können. Fasern, die eine ebenfalls ausreichende Eigenelastizität und Stabilität aufweisen, bestehen etwa aus einer Mischung aus Aluminiumoxid und Siliziumdioxid. Sie enthalten beispielsweise etwa 75 Gew.% Aluminiumoxid und etwa 25 Gew.% Siliziumdioxid, wobei übliche Zusatzstoffe vorhanden sein können. Um die notwendigen Rückstellkräfte in dem Spaltraum zwischen einem Monolithen und einem Katalysatorgehäuse zu erzielen, muß eine relativ große Fasermenge unter Vorspannung in den Spaltraum eingebaut werden. Die Matten sind im unverbauten Zustand um ein Vielfaches dicker als es dem Spaltmaß des Spaltraumes entspricht. Übliche Matten der in Rede stehenden Art sind im unverbauten Zustand etwa 10 cm dick, wohingegen das Spaltmaß üblicherweise 6-8 mm beträgt.
Bisher wurden solche Matten in PE-Folien verpackt und durch eine Vernähung auf eine Höhe von einigen Zentimetern komprimiert. Aber auch in diesem Zustand sind die Matten noch schwer zu handhaben. Insbesondere kann sich die PE-Umhüllung bei zweischaligen Katalysatorgehäusen in den Trennspalt der Gehäusehalbschalen einschieben und deren Verschweißung behindern.

In WO-A-94/24425 ist ein Abgaskatalysator mit einer Lagerungsmatte beschrieben, bei der die Mineralfasern mit einem elastischen Bindemittel verbunden bzw. in eine Matrix eines solchen Bindemittels eingebettet sind. Auf diese Weise können Matten mit einer dem Spaltmaß angenäherten Dicke erhalten werden, die wesentlich einfacher zu handhaben bzw. zu montieren sind. Beim endgültigen Einbau werden sie dann entsprechend dem Spaltmaß komprimiert Lind liegen im Spaltraum unter Vorspannung ein. Die auf die Monolithen-Umfangsfläche und das Gehäuse ausgeübten Rückstellkräfte werden dabei sowohl durch den elastischen Binder als auch durch die Fasern selbst hervorgerufen. Als Bindemittel werden Acryllatex, Styrol-Butadien, Vinylpyridin, Acrylnitril, Vinylchlorid und Polyurethan eingesetzt.

In Abgaskatalysatoren für Benzinmotoren herrschen üblicherweise weit oberhalb von 500°C liegende Temperaturen. Unter diesen Bedingungen verbrennen die genannten Polymerbinder, wie beispielsweise Acryl-Latex-Binder praktisch rückstandsfrei. Die zur Halterung des Monolithen erforderlichen Rückstellkräfte werden dann ausschließlich durch die Eigenelastizität der Fasern bewerkstelligt.

Im Falle von Dieselmotoren werden aber solch hohe Temperaturen gar nicht erreicht. Im Mitteilastbereich eines Dieselmotors liegen die Abgastemperaturen nur zwischen 220 und 300°C. Bei diesen Temperaturen würde etwa ein Acryl-Latex-Binder nicht rückstandsfrei verbrennen, sondern verkokeln und dabei verhärten. Die elastischen Eigenschaften des Mattensystems würden dadurch derart verändert, daß eine sichere Halterung des Monolithen nicht mehr gewährleistet wäre. Hinzu kommt, daß durch die Radialvibrationen des Monolithen beim Fahrzeugbetrieb die Dicke der solchermaßen verhärteten Lagerungsmatte durch Verdichtung verringert würde.

Ausgehend von diesen Beobachtungen wird gem. Anspruch 1 vorgeschlagen, ein Bindemittel zu verwenden, das sich bei den im Mittellastbereich eines Dieselmotors herrschenden Temperaturen, also bei 220°C bis 300°C, zersetzt, ohne unter Rückstandsbildung zu verhärten. Bindemittel, die diese Anforderung erfüllen sind metallorganische Verbindungen und Silikone. Bei der erst bei relativ hohen Temperaturen stattfindenden thermischen Zersetzung werden im Fall von Silikonen organische Gruppen unter Siliziumdioxidbildung abgespalten. Dies führt aber nicht zu einer Verhärtung des Binders bzw. der Lagerungsmatte.

## Patentansprüche

1. Abgaskatalysator mit
- einem Gehäuse, einem in dem Gehäuse gelagerten Monolithen und einer zwischen Gehäuse und Monolith angeordneten Mineralfaser-Lagerungsmatte, bei der die Mineralfasern durch ein elastisches Bindemittel miteinander verbunden sind, das sich bei Betriebstemperaturen des Abgaskatalysators im Bereich von 220 °C bis 300 °C zersetzt, ohne unter Rückstandsbildung zu verhärten, wobei das Bindemittel eine metallorganische Verbindung oder ein Silikon ist.

2. Abgaskatalysator nach Anspruch 1,
**dadurch gekennzeichnet,**
**dass** die Minerlafasern folgende Zusammensetzung (Gew.%) aufweisen:
| | |
|---|---|
| Al₂O₃ | 0 - 99 % |
| SiO₂ | 1 - 99,8 % |
| B₂O₃ | 0 - 30 % |
| Alkali-Oxide | 0 - 50 % |
| Erdalkali-Oxide | 0 - 50 % |
| Eisen-Oxide | 0 - 15 % |
| Titan-Oxide | 0 - 15 % |

3. Abgaskatalysator nach Anspruch 1 oder 2,
**dadurch gekennzeichnet,**
**dass** die Fasern der Lagerungsmatte zu 95 Gew.% aus Aluminiumoxid bestehen.

4. Abgaskatalysator nach Anspruch 1 oder 2,
**dadurch gekennzeichnet,**
**dass** die Fasern der Lagerungsmatte zu 75 Gew.% aus Aluminiumoxid und zu 25 Gew.% Siliziumdioxid bestehen.

## Claims

1. Exhaust gas catalyser with
- a casing, a monolith supported in the casing and a mineral fibre bedding mat arranged between casing and monolith, in which bedding mat the mineral fibres are connected together by an elastic bonding agent, which decomposes at operating temperatures of the exhaust gas catalyser in the range between 220 ºC and 300 ºC without hardening with the formation of residues, the bonding agent being an organic metallocene compound or a silicone.

2. Exhaust gas catalyser according to Claim 1, **characterized in that** the mineral fibres have the following composition (% by weight):
| | |
|---|---|
| Al₂O₃ | 0 - 99 % |
| SiO₂ | 1 - 99.8 % |
| B₂O₃ | 0 - 30 % |
| Alkali oxide | 0 - 50 % |
| Alkaline earth oxide | 0 - 50 % |
| Iron oxide | 0 - 15 % |
| Titanium oxide | 0 - 15 % |

3. Exhaust gas catalyser according to Claim 1 or 2, **characterized in that** the fibres of the bedding mat consist of 95% by weight of aluminium oxide.

4. Exhaust gas catalyser according to Claim 1 or 2, **characterized in that** the fibres of the bedding mat consist of 75% by weight of aluminium oxide and 25% by weight of silicon dioxide.

## Revendications

1. Pot catalytique pour des gaz d'échappement comprenant
- une enveloppe, un monolithe monté dans l'enveloppe et un mat d'emmagasinage en fibres minérales interposé entre l'enveloppe et le monolithe, dans lequel les fibres minérales sont reliées entre elles par un liant élastique qui se décompose à des températures de fonctionnement du pot catalytique pour des gaz d'échappement de l'ordre de 220° C à 300° C, sans durcir avec formation de résidus, le liant étant un composé organométallique ou une silicone.

2. Pot catalytique pour des gaz d'échappement suivant la revendication 1,
**caractérisé en ce que** les fibres minérales ont la composition suivante (en % , en poids) :
| | |
|---|---|
| Al₂O₃ | 0 - 99 % |
| SiO₂ | 1 - 99,8 % |
| B₂O₃ | 0 - 30 % |
| Oxyde de métal alcalin | 0 - 50 % |
| Oxyde de métal alcalino-terreux | 0 - 50 % |
| Oxyde de fer | 0 - 15 % |
| Oxyde de titane | 0 - 15 % |

3. Pot catalytique suivant la revendication 1 ou 2, **caractérisé en ce que** les fibres du mat d'emmagasinage sont à 95 % en poids en oxyde d'aluminium.

4. Pot catalytique suivant la revendication 1 ou 2, **caractérisé en ce que** les fibres du mat d'emmagasinage sont à 75 % en poids en oxyde d'aluminium et à 25 % en poids en dioxyde de silicium.
